# EUROPEAN PATENT APPLICATION

(11) **EP 1 158 439 A1**
(43) Date of publication of application: **28.11.2001**
(21) Application number: 01304441.7
(22) Date of filing: 21.05.2001
(51) Int. Cl.: G06F 17/60

(54) **Method and system for consulting services**

(30) Priority: 22.05.2000 US 206031 P; 08.12.2000 US 732660
(71) Applicant: GENERAL ELECTRIC COMPANY, Schenectady, NY 12345 (US)
(72) Inventor: Battilega, Eric A., San Jose, California 95123 (US); Orpilla, Jennifer Joy, Los Gatos, California 95032 (US); Robare, David J., Menlo Park, California 94025 (US); Lai, Wilson, Los Gatos, California 95032 (US)
(74) Representative: Pedder, James Cuthbert

(57) **Abstract**

A method for providing consulting services to a customer includes assisting the customer online in formulating a problem to be addressed by the consulting services provider, suggesting at least one approach for using consulting services to resolve the problem, and providing the consulting services in a collaborative and centralized web-based environment. This method facilitates communication and exchange of documents between customer and consultant and thus shortens time needed to clarify a problem, propose a solution and achieve the solution.

## Description

This invention relates generally to providing consulting services and, more particularly, to methods and systems for requesting and providing collaborative consulting services in a real-time environment.

When a customer of a consulting service provider requests consulting services to solve a problem, exchanges of information between the customer and the consultant are, of course, necessary to characterize the problem to be solved and to work toward a resolution of the problem. A customer having a problem to be solved generally identifies a consultant or consulting services provider and makes an inquiry (usually by telephone). Then the consultant, generally via voice or e-mail communication, collects information pertinent to defining the problem. Typically, the consultant then writes a draft description of a proposed scope of work along with written output deliverables, proposed schedule, and proposed pricing. The proposal is faxed or mailed to the customer, who then may request changes to the proposal. Initiation of work and solution of the problem thus may be delayed for so long as it may take the customer and the consultant to define the problem, and its proposed solution, to the satisfaction of both.

During the course of work by the consultant on the problem, the customer typically sends information pertinent to the problem by fax, e-mail or voice communication to the consultant as may be requested. When the work is finished, the consultant generally faxes or e-mails a draft report to the customer. The customer then reviews the report and faxes or e-mails comments to the consultant, who revises the report as needed and returns it to the customer.

The above process involves delays and invites errors, such as errors in the transcription of verbal communications, or miscommunications when different versions of a draft report are routed to various people for comment. Some web-based systems are known which provide a common centralized collaboration area where single versions of information, evaluations, and draft reports can be posted, accessed, reviewed and updated by the customer and the consultant or consulting services provider. However, even with availability of such collaboration areas, the process of defining the problem to be solved and arriving at its solution can involve expenditures of time and productivity by both customer and consultant. In addition , resolution of similar or related problems will elicit identical or similar advice from a consultant. Thus, especially in large organizations where many problems may be similar or related to one another, the same consulting advice may be unknowingly sought by the organization over and over again.

It would therefore be desirable to provide a method and system for consulting services that increase the productivity and speed of the necessary collaboration between customer and consultant. It would further be desirable to provide rapid and convenient access by customers to the appropriate consulting services for resolution of problems. It would still further be desirable to provide consulting services that prompt consulting services customers to provide specific information for identifying a problem in a standardized format.

A method for providing consulting services to a customer in one embodiment includes assisting the customer online in formulating a problem to be addressed by the consulting services provider, suggesting at least one approach for using consulting services to resolve the problem, and providing the consulting services in a collaborative and centralized web-based environment. The method facilitates communication and exchange of documents between customer and consultant and thus shortens time needed to clarify a problem, propose a solution and achieve the solution.

In another embodiment, a consulting method includes the steps of assisting a customer in formulating a problem to be addressed by a consulting services provider with an electronic user interface, suggesting through the electronic user interface at least one approach for using consulting services to resolve the problem, and providing the user interface in a centralized web-based environment. The method further includes the step of providing the electronic user interface wherein the user interface is configured to assist the customer in formulating the problem to be addressed by the consulting services provider.

An exemplary electronic system for providing consulting services to a customer includes a server configured to receive a consulting services request from a customer, a user interface stored on the server, and a plurality of devices coupled through a computer network to said server. The user interface is configured to assist the customer online in formulating a problem to be addressed by the consulting services provider. The devices are configured to provide the user with access to the user interface, for example by interconnecting with the server through the Internet or another distributed computer network. The system and method thus provide centralized and collaborative interaction between the customer and consulting services provider, to shorten the overall time required to formulate and then to solve the problem.

The invention will now be described in greater detail, by way of example, with reference to the drawings, in which:-
Figure 1 is a block diagram of a system for providing consulting services;
Figure 2 is a flow diagram of a method for providing consulting services;
Figure 3 is a first web page from an exemplary user interface for implementing the method illustrated in Figure 2;
Figure 4 is a second web page from the exemplary user interface;
Figure 5 is a third web page from the exemplary user interface;
Figure 6 is a fourth web page from the exemplary user interface; and

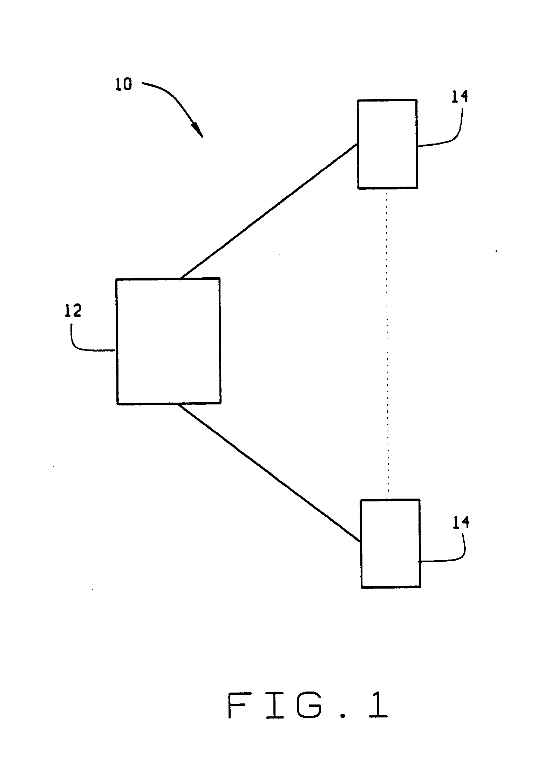

Figure 1 is a block diagram of a system 10 in accordance with one embodiment of the present invention. System 10 includes a server 12 and a plurality of devices 14 connected to server 12. In one embodiment, devices 14 are computers including a web browser such as Microsoft® Internet Explorer or Netscape Navigator, and server 12 is accessible to devices 14 via an electronic network such as the Internet. In an alternative embodiment, devices 14 are servers for a network of customer devices. Devices 14 are interconnected to the Internet through many interfaces including through a network, such as a local area network (LAN) or a wide area network (WAN), through dial-in connections, cable modems and special high-speed IDSN lines. Alternatively, devices 14 could be any device capable of interconnecting to the Internet including a web-based phone or other web-based connectable equipment.

One embodiment of a method for providing consulting services is implemented on a distributed network of devices 14 (shown in Figure 1), e.g. computers. For example, a provider of consulting services sets up a web site on server 12, which customers access through the Internet via one of devices 14 using the web-browser. However, although the embodiment described below is implemented on the Internet using web pages, alternative embodiments are implemented using other types of distributed computer networks.

The web site includes web pages that form a user interface configured to assist a customer in formulating a problem to be addressed by a consulting services provider and to suggest at least one approach for using the consulting services to resolve the problem. More specifically, to assist the customer the user interface includes elements such as hyperlinks, radio buttons, and interactive input spaces for prompting the customer to provide information relating to the problem to be addressed, and guiding the customer to additional information on the web site that is potentially useful for solving the problem. Thus, the user interface helps the customer formulate the problem to be addressed by guiding the customer interactively in defining the problem to be addressed.

For example, in one embodiment of the method as applied to a customer seeking consulting services in relation to a nuclear power plant, the customer is prompted to provide information relating to the problem to be addressed by prompting the customer to provide, for example, the identity of a plant system to which the problem relates, the identity of a system component to which the problem relates, the current operating conditions of the plant system to which the problem relates, a description of pre-existing consulting services to which the problem relates, and a type of consultation support that is potentially useful for solving the problem.

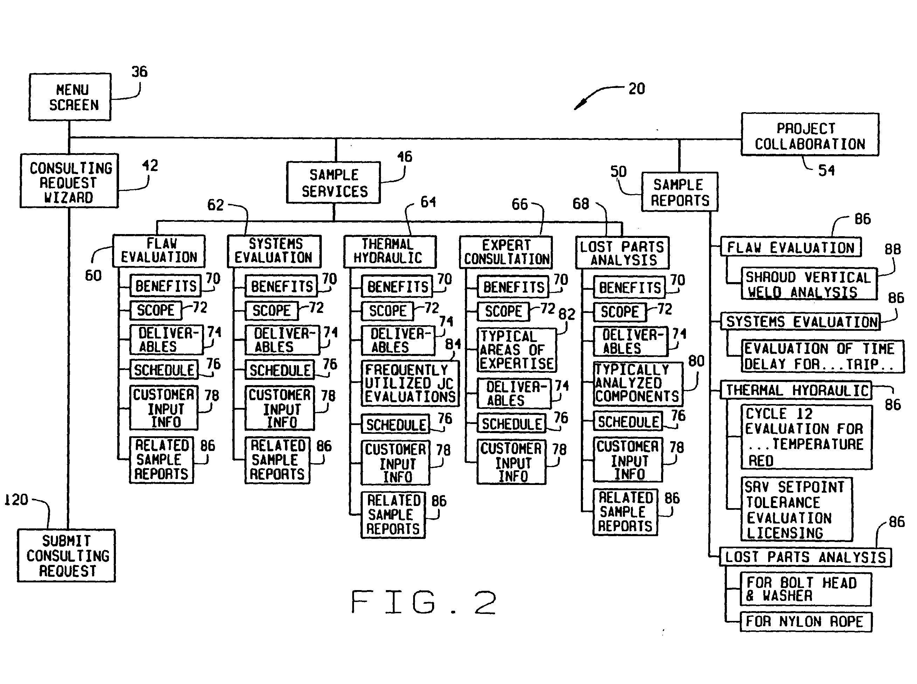

Figure 2 is a flow diagram of one embodiment of a method 20 for providing consulting services. Method 20 includes assisting the customer online in formulating a problem to be addressed by the consulting service provider, suggesting at least one approach for using consulting services to resolve the problem, and providing the consulting services in a collaborative and centralized web-based environment.

More particularly, a customer seeking consulting services from the consulting service provider accesses a menu screen 36 via the Internet and one of devices 14 (shown in Figure 1). Menu screen 36 includes a listing or menu of a plurality of customer options. The options include, for example, a Consulting Request Wizard 42, a Sample Services option 46, a Sample Reports option 50, and a Project Collaboration option 54. Each customer option corresponds to a different screen or web page, or set of screens or web pages in the user interface. The pages or screens corresponding to each option display prompts such as interactive input spaces, verbally descriptive hyperlinks or other information that helps the customer navigate through system 10. For example, Consulting Request Wizard 42 is configured with multiple interactive input spaces to guide the customer interactively in defining the problem and formulating a request for specific types of consulting services to address the problem.

Sample Services option 46 provides descriptions of a plurality of standard or sample services that are provided by the consulting services provider and are available to the customer. For example, where the consulting service provider offers services relating to nuclear energy facilities, Sample Services option 46 includes descriptions of such services as Flaw Evaluation 60, Systems Evaluation 62, Thermal Hydraulic Evaluation 64, Expert Consultation 66, and Lost Parts Analysis 68. Included in a typical sample service description in Sample Services 46 are descriptions, for example, of Benefits 70, Scope of Service 72, Deliverables 74, Schedule 76, and Customer Input Information 78. Benefits 70 describes how the particular Sample Service 46 may contribute to a problem solution. Scope of Service 72 displays standard and optional items included in a scope of work to be performed as part of the particular Sample Service 46. Deliverables 74 describes items, e.g. types and formats of reports and other documents, to be produced as part of the particular Sample Service 46. Schedule 76 describes, e.g. a typical schedule for the particular Sample Service 46 and factors that may affect scheduling. Customer Input Information 78 describes documents, specifications and other items that the consultant needs to perform the particular Sample Service 46 and that are to be provided by the customer. Depending on the particular sample service being described, other categories of information are provided to guide the customer. For example, for Lost Parts Analysis 68, a Typically Analyzed Components description 80 is provided. Similarly, for Expert Consultation 66, a Typical Areas of Expertise description 82 is provided, and for Thermal Hydraulic Evaluation 64, a Frequently Utilized JCO Evaluations description 84 is provided.

Each description of a sample or standard service in Sample Services 46 also links to any Related Sample Reports 86, further described below, related to the sample service. For example, a customer viewing Flaw Evaluation sample service description 60 can link to view a sample Shroud Vertical Weld Analysis report 88. Alternatively, by selecting Sample Reports option 50, the customer may display any available Related Sample Report 86 for any Sample Service 46. In a further embodiment, Sample Reports screen 50 displays a link (not shown) by which the customer can display a list of available plant-specific reports which are not displayed as Related Sample Reports 86 but which might contribute to a solution of the customer's problem.

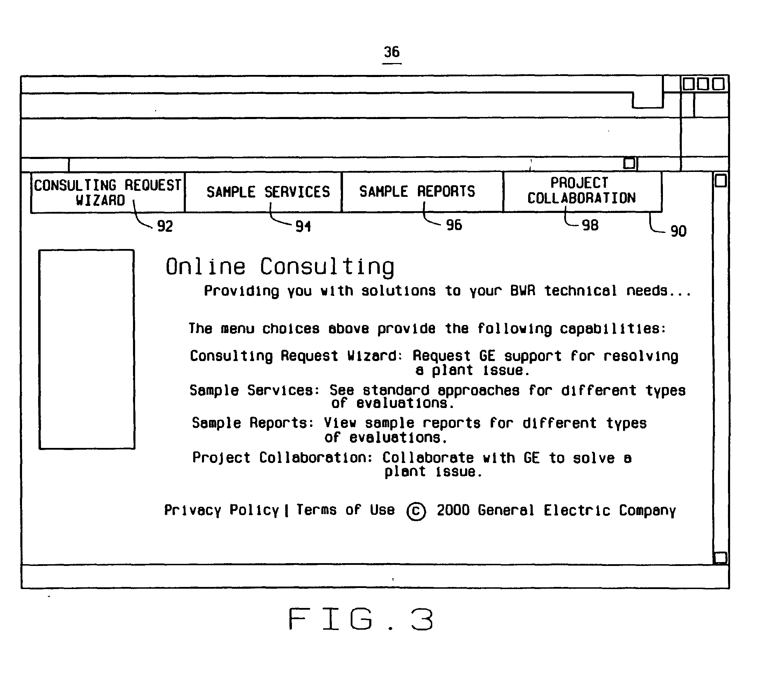

Figures 3-6 are web pages from an exemplary user interface for implementing the consulting services method. In one embodiment, the exemplary user interface is configured for providing consulting services to a customer seeking consulting services regarding a type of plant, such as a nuclear power plant. In alternative embodiments, when the customer seeks consulting services relating to a different type of plant, system, component, or business, the user interface is customized to prompt and guide the customer depending on the type of plant, system, component or business. The user interface is customized, for example, by modifying the specific queries and prompts to the customer for information relating to the problem to be solved.

Figure 3 is a first web page from the exemplary user interface, displaying menu 36. Menu 36 includes a menu bar 90 displaying hyperlinks to each of the plurality of customer options available to the customer. For example, when the customer options include Consulting Request Wizard 42, Sample Services option 46, Sample Reports option 50, and Project Collaboration option 54, menu bar displays a Consulting Request Wizard hyperlink 92, a Sample Services hyperlink 94, a Sample Reports hyperlink 96, and a Project Collaboration hyperlink 98.

From screen 36 the customer selects, for example, Consulting Request Wizard 42 by, for example, selecting Consulting Request Wizard hyperlink 92 with a computer mouse or pointing device. Similarly, the customer uses a mouse or pointing device to select Sample Services option 46 by selecting Sample Services hyperlink 94, to select Sample Reports option 50 by selecting Sample Reports hyperlink 96, and to select Project Collaboration option 54 by selecting Project Collaboration option 98.

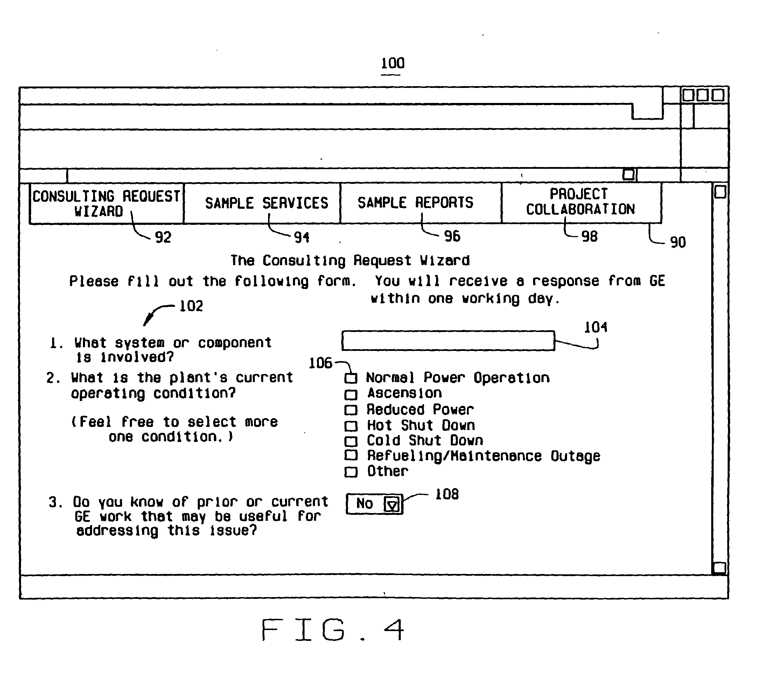

Figure 4 is a second web page 100 from the exemplary user interface displaying a first portion of Consulting Request Wizard 42. Page 100 displays the multiple prompts including interactive input spaces 104, checkboxes 106, scroll-down bars 108 and the like that prompt the customer to input information relating to the problem to be solved. For example, page 100 includes a list of questions 102 to which the customer responds by typing answers in the corresponding input spaces 104, checking boxes 106, and selecting options from scroll down bars 108. In an exemplary embodiment, the list of questions includes questions regarding, for example, the following: the identity of the system or component involved, the plant's current operating condition, whether or not the customer is aware of prior or current work of the consulting services provider that may be useful for solving the problem (and if so, a brief description of that prior or current work), what type of consulting services support might be needed, how much time is available to resolve the issue, what plant or unit the inquiry applies to, and the areas of expertise that the customer desires to help address the issue. For certain questions or prompts, the customer is guided or assisted in formulating the problem to be solved by the listing of multiple possible answers to the question, and the answers are selected by the customer by checking off boxes 106, or selecting answers from a scroll-down bar 108. Such prompting is especially suitable, for example, in assisting the customer in providing information on the area of expertise from which the customer desires help, where providing the customer with multiple distinct possible choices is helpful in formulating the customer request.

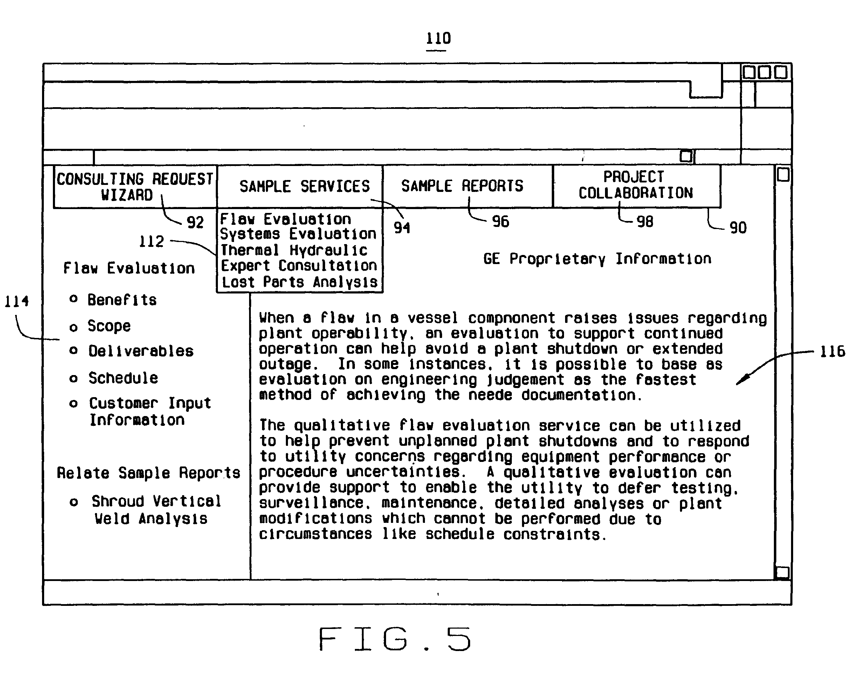

Depending on the information provided to Wizard 42, the customer is provided with information pertaining to a possible approach to the problem. Figure 5 is a third web page 110 from the exemplary user interface. When the customer selects Sample Services hyperlink 94, a pop-up menu 112 listing the available consulting services is displayed. With regard to consulting services available for problems relating to a nuclear facility, for example, the sample services include Flaw Evaluation, Systems evaluation, Thermal Hydraulic evaluation, Expert Consultation, and Lost Parts Analysis. In alternate embodiments of the user interface, the sample services listed include the available consulting services that are directed toward the problems that arise in alternate facilities, plants or systems. Each entry of a sample service on pop-up menu 112 is a hyperlink to a page displaying a description of the sample service selected by selecting the hyperlink.

Figure 5 shows an exemplary page 110 displaying a description of the sample service Flaw Evaluation. A first portion of page 110 includes a menu bar 114 listing multiple hyperlinks to pages that describe different features or aspects of the sample service. A second portion of page 110 includes a brief summary description 116 of the sample service. In Figure 5, summary description 116 describes Flaw Evaluation, but summary description 116 changes depending on the sample service selected by the customer. From menu bar 114, the customer selects any one of the listed features or aspects of the sample service, to hyperlink to a page describing that particular feature or aspect of the sample service. As described above, in one embodiment menu bar 114 lists Benefits, Scope, Deliverables, Schedule and Customer Input Information. Menu bar 114 also lists any related sample reports that relate to the problem being addressed as determined from the customer input information provided to Consulting Request Wizard 42. Again, any listed sample report in menu bar 114 is a hyperlink to the listed sample report itself.

For example, when the customer selects "Scope" from menu bar 114, a Scope of Service description 72 for the sample service currently described by page 110 is displayed. The Scope of Service description 72 is displayed on another page of the user interface (not shown), which describes standard actions taken by the consulting service provider in response to problems similar to that described by the customer. Where such actions include, for example, generating a standard report, the customer is linked to a corresponding Related Sample Report 86. Where more than one type of report is available in connection with the kind of problem being presented by the customer, more than one Related Sample Report 86 link is provided.

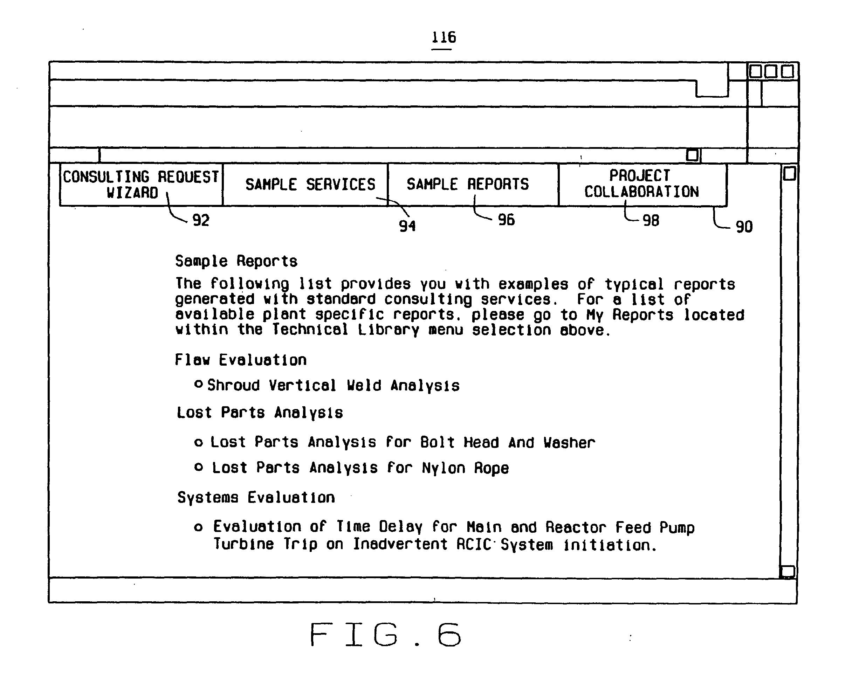

Alternatively, by selecting Sample Reports hyperlink 96, the customer is linked to a page displaying any available Related Sample Report 86 for any Sample Service 46. Figure 6 shows a fourth web page 116 from the exemplary user interface that is displayed when the customer selects Sample Reports hyperlink 96. Page 116 lists the titles of sample reports generated for each type of sample service available to the customer. Thus, in the exemplary embodiment as shown in Figure 5, page 116 lists at least one sample report generated for each of Flaw Evaluation, Systems Evaluation, Thermal Hydraulic evaluation (not shown) , Expert Consultation (not shown), and Lost Parts Analysis. Each listed title is a hyperlink to the page or pages displaying the selected sample report. In a further embodiment, Sample Reports screen 50 displays a link (not shown) by which the customer can display a list of available plant-specific reports which are not displayed as Related Sample Reports 86 but which might contribute to a solution of the customer's problem.

The customer thus is able to view and/or print pertinent consulting reports previously produced by the consulting service provider. The customer then, for example, circulates a typical report for comments by the customer's staff as to whether such a report would be responsive to the customer's needs. In a further embodiment, a customer desiring to formulate a request for services not specifically delineated in Sample Services 46 receives access through Wizard 42 to assistance online or by telephone from a consultant.

When the customer has completed answers to questions posed by Wizard 42 and has reviewed any information provided via Scope of Service descriptions 72 and Related Sample Report 86 displays, the customer submits a request 120 for consulting services using a link (not shown) provided from Wizard 42. The customer is provided online with a tracking number and a confirmation of the request 120 submission. In one embodiment the customer submits more than one request 120 using Wizard 42 and receives a tracking number and confirmation for each submission 120.

Request 120 is transmitted to, for example, an Internet address (not shown) for a group of consultants employed by the consulting service provider. The customer's problem is routed in one embodiment to at least one consultant having an educational and professional background relevant to the problem. Within a fixed period that depends on the type of problem submitted, the customer receives a response, online or by telephone or fax, from the consultant for initiation of consulting work. In one embodiment, the fixed period is one working day.

Consulting services are performed in one embodiment in a collaborative and centralized web-based environment accessible through Project Collaboration 54, by selecting Project Collaboration hyperlink 98. The customer and the consulting service provider collaborate using, for example, ProjectNet® , a project management and collaborative service by Cephren, Inc. at www.cephren.com. The project collaboration service includes log-in processes for identifying the customer for example with a password and authorizing access by the customer to the collaboration environment. Alternative embodiments contemplate the use of alternative collaboration tools. Thus the customer and the consultant are able to confer online, for example, in real time, using the information previously submitted by the customer using Wizard 42. For example, a web-based common centralized collaboration area is established where single versions of information, evaluations, and draft reports are posted, accessed, reviewed, and updated by the customer and the consultant.

The above-described methods and systems provide customers with convenient access to the capabilities and expertise of the consulting service provider. Information need to characterize a problem is captured quickly and accurately. Because such items as scope of work, deliverables and reports are standardized and described in a format readily accessible by the customer, work initiation time is reduced. Also, because information needed to solve the problem is centralized and readily available online, time needed for problem solving is shortened.

For the sake of good order, various aspects of the invention are set out in the following clauses:-
1. A method for providing consulting services to a customer, said method comprising the steps of:
   assisting the customer online in formulating a problem to be addressed by the consulting services provider;
   suggesting at least one approach for using consulting services to resolve the problem; and
   providing the consulting services in a collaborative and centralized web-based environment.
2. A method in accordance with Clause 1 further comprising the step of formulating a request for specific types of consulting services to address the problem.
3. A method in accordance with Clause 2 further comprising the step of providing a plurality of customer options via a menu screen.
4. A method in accordance with Clause 2 wherein said step of providing a plurality of customer options comprises the step of providing at least two of a Consulting Request Wizard, a Sample Services option, a Sample Reports option, and a Project Collaboration option.
5. A method in accordance with Clause 4 wherein said step of assisting the customer online in formulating a problem to be addressed by the consulting services provider comprises the step of providing the Consulting Request Wizard, the Consulting Request Wizard configured to guide the customer interactively in defining the problem to be addressed.
6. A method in accordance with Clause 5 wherein said step of providing the Consulting Request Wizard comprises the step of providing the Consulting Request Wizard with a plurality of prompts to the customer to provide information relating to the problem to be addressed.
7. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying a physical plant to which the problem relates.
8. A method in accordance with Clause 7 wherein the step of providing the Consulting Request Wizard with a plurality of prompts to the customer to provide information relating to the problem to be addressed comprises the step of providing the Consulting Request Wizard with a prompt to the customer to provide information on the operating conditions of the physical plant.
9. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying a system to which the problem relates.
10. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying a component to which the problem relates.
11. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying other consulting work that is potentially useful for solving the problem.
12. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying a type of consultation support that is potentially useful for solving the problem.
13. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information identifying at least one area of technical expertise that is potentially useful for solving the problem.
14. A method in accordance with Clause 6 wherein the step of providing the Consulting Request Wizard with a plurality of prompts to the customer to provide information relating to the problem to be addressed comprises the step of providing the Consulting Request Wizard with a prompt to the customer to provide information on the time available to solve the problem.
15. A method in accordance with Clause 4 wherein said step of providing at least two of a Consulting Request Wizard, a Sample Services option, a Sample Reports option, and a Project Collaboration option comprises providing the Sample Services option, the Sample Services option configured to provide the customer with descriptions of a plurality of sample services available to the customer.
16. A method in accordance with Clause 15 wherein said step of providing the Sample Services option comprises the step of providing the customer with descriptions of standard services including at least one of flaw evaluation, systems evaluation, thermal hydraulic evaluation, expert consultation, and lost parts analysis.
17. A method in accordance with Clause 16 wherein said step of providing the Sample Services option comprises the step of providing the customer with a description of each standard service, the description for each standard service comprising at least two of benefits of the service, scope of the service, deliverables of the service, schedule of the service, and customer input information required for the service.
18. A method in accordance with Clause 4 wherein said step of providing at least two of a Consulting Request Wizard, a Sample Services option, a Sample Reports option, and a Project Collaboration option comprises providing the Sample Services option and the Sample Reports option, the Sample Reports option configured to provide the customer with links to sample reports that are related to a standard service selected by the customer.
19. A method in accordance with Clause 4 wherein said step of providing at least two of a Consulting Request Wizard, a Sample Services option, a Sample Reports option, and a Project Collaboration option comprises providing the Project Collaboration option, the Project Collaboration option configured to provide the customer and the consulting services provider with a centralized collaboration area wherein single versions of consulting. communications are posted and revised.
20. A consulting method comprising the steps of:
   with an electronic user interface, assisting a customer in formulating a problem to be addressed by a consulting services provider;
   suggesting through the electronic user interface at least one approach for using consulting services to resolve the problem; and
   providing the user interface in a centralized web-based environment.
21. A consulting method in accordance with Clause 20 further comprising the step of providing the electronic user interface, the electronic user interface configured to assist the customer in formulating the problem to be addressed by the consulting services provider.
22. A consulting method in accordance with Clause 21 wherein the step of providing the electronic user interface comprises the step of providing a web site accessible by the customer via a computer device interconnected to a distributed computer network.
23. A consulting method in accordance with Clause 21 wherein the step of assisting the customer, with an electronic user interface, in formulating a problem to be addressed by the consulting services provider comprises the step of guiding the customer interactively in defining the problem to be addressed.
24. A consulting method in accordance with Clause 23 wherein the step of guiding the customer interactively in defining the problem to be addressed comprises the step of prompting the customer to provide information relating to the problem to be addressed.
25. A consulting method in accordance with Clause 24 wherein the step of prompting the customer to provide information relating to the problem to be addressed comprises the step of prompting the customer to provide at least one of an identity of a plant system to which the problem relates, the identity of a system component to which the problem relates, current operating conditions of the plant system to which the problem relates, a description of pre-existing consulting services to which the problem relates, a type of consultation support that is potentially useful for solving the problem, an area of technical expertise that is potentially useful to solve the problem, and an amount of time available to solve the problem.
26. A consulting method in accordance with Clause 25 wherein the step of suggesting through the electronic user interface at least one approach for using the consulting services to resolve the problem comprises the step of providing the customer with a description of standard actions taken by the consulting services provider in response to problems of the type described by the information provided by the customer.
27. A consulting method in accordance with Clause 26 wherein the step of providing the customer with a description of standard actions taken by the consulting services provider in response to problems of the type described by the information provided by the customer comprises the step of describing at least one of a one of a plurality of standard actions, the standard actions comprising flaw evaluation, systems evaluation, expert consultation and lost parts analysis.
28. A consulting method in accordance with Clause 26 wherein the step of providing the customer with a description of standard actions taken by the consulting services provider in response to problems of the type described by the information provided by the customer comprises the step of describing a standard report for each type of standard action.
29. A consulting method in accordance with Clause 28 wherein the step of describing a standard report comprises the step of providing the customer with access to at least one related sample report.
30. A consulting method in accordance with Clause 29 wherein the step of providing the customer with access to at least one related sample report comprises the step of providing the customer with access to a plurality of sample reports that are related to the problem being addressed.
31. A consulting method in accordance with Clause 29 further comprising the step of prompting the customer to specify a request for at least one of the available standard actions to solve the problem being addressed.
32. A consulting method in accordance with Clause 31 further comprising the step of generating a consulting services request based on the information provided by the customer and the standard actions specified by the customer.
33. A consulting services method in accordance with Clause 32 further comprising the step of transmitting the consulting services request to the consulting service provider.
34. A consulting method in accordance with Clause 33 further comprising the step of providing a response to the consulting services request.
35. A consulting method in accordance with Clause 34 wherein the step of providing a response to the consulting services request comprises the steps of:
   contacting the customer with a consultant from the consulting services provider; and
   initiating consulting services for the customer.
36. An electronic system for providing consulting services to a customer, said system comprising:
   a server configured to receive a consulting services request from a customer;
   a user interface stored on said server, said user interface configured to assist the customer online in formulating a problem to be addressed by the consulting services provider; and
   a plurality of devices coupled through a computer network to said server, said plurality of devices configured to provide the user with access to said user interface.
37. An electronic system in accordance with Clause 36, said user interface further configured to provide the customer with at least one approach for using consulting services to resolve the problem..
38. An electronic system in accordance with Clause 36 wherein said user interface comprises a centralized web-based application configured to provide the consulting services including collaboration with the customer.
39. An electronic system in accordance with Clause 36 wherein said user interface is configured to assist the customer in formulating a request for specific types of consulting services to address the problem.
40. A method in accordance with Clause 36 wherein said user interface comprises a plurality of customer options presented via a menu screen.
41. An electronic system in accordance with Clause 40 wherein said plurality of customer options comprises at least two of a Consulting Request Wizard, a Sample Services option, a Sample Reports option, and a Project Collaboration option.
42. An electronic system in accordance with Clause 41 wherein said plurality of customer options comprises the Consulting Request Wizard, the Consulting Request Wizard configured to guide the customer interactively in defining the problem to be addressed.
43. An electronic system in accordance with Clause 42 wherein said Consulting Request Wizard comprises a plurality of prompts to the customer to provide information relating to the problem to be addressed.
44. An electronic system in accordance with Clause 43 wherein the plurality of prompts to the customer to provide information relating to the problem to be addressed comprises a prompt to the customer to provide information identifying a physical plant to which the problem relates.
45. An electronic system in accordance with Clause 43 wherein the plurality of prompts to the customer to provide information relating to the problem to be addressed comprises a prompt to the customer to provide information on the operating conditions of the physical plant.
46. An electronic system in accordance with Clause 43 wherein the plurality of prompts to the customer to provide information relating to the problem to be addressed comprises a prompt to the customer to provide information identifying a system to which the problem relates.
47. An electronic system in accordance with Clause 43 wherein the plurality of prompts to the customer to provide information relating to the problem to be addressed comprises a prompt to the customer to provide information identifying a component to which the problem relates.
48. An electronic system in accordance with Clause 43 wherein the plurality of prompts to the customer to provide information relating to the problem to be addressed comprises a prompt to the customer to provide information identifying other consulting work that is potentially useful for solving the problem.
49. An electronic system in accordance with Clause 43 wherein the plurality of prompts to the customer to provide information relating to the problem to be addressed comprises a prompt to the customer to provide information identifying at least one area of technical expertise that is potentially useful for solving the problem.
50. An electronic system in accordance with Clause 43 wherein the plurality of prompts to the customer to provide information relating to the problem to be addressed comprises a prompt to the customer to provide information on the time available to solve the problem.
51. An electronic system in accordance with Clause 41 wherein said plurality of customer options comprises the Sample Services option, the Sample Services option configured to provide the customer with descriptions of a plurality of sample services available to the customer.
52. An electronic system in accordance with Clause 51 wherein the Sample Services option comprises descriptions of standard services including at least one of flaw evaluation, systems evaluation, thermal hydraulic evaluation, expert consultation, and lost parts analysis.
53. An electronic system in accordance with Clause 52 wherein a description of each standard service comprises at least two of benefits of the service, scope of the service, deliverables of the service, schedule of the service, and customer input information required for the service.
54. An electronic system in accordance with Clause 41 wherein said plurality of customer options comprises the Sample Services option and the Sample Reports option, the Sample Reports option configured to provide the customer with links to sample reports that are related to a standard service selected by the customer.
55. An electronic system in accordance with Clause 41 wherein said plurality of customer options comprises the Project Collaboration option, the Project Collaboration option configured to provide the customer and the consulting services provider with a centralized collaboration area wherein single versions of consulting communications are posted and revised.

## Claims

1. An electronic system (10) for providing consulting services to a customer, said system comprising:
a server (12) configured to receive a consulting services request (120) from a customer;
a user interface stored on said server, said user interface configured to assist the customer online in formulating a problem to be addressed by the consulting services provider; and
a plurality of devices (14) coupled through a computer network to said server, said plurality of devices configured to provide the user with access to said user interface.

2. An electronic system (10) in accordance with Claim 1, said user interface further configured to provide the customer with at least one approach for using consulting services to resolve the problem.

3. An electronic system (10) in accordance with Claim 1 wherein said user interface comprises a centralized web-based application configured to provide the consulting services including collaboration with the customer.

4. An electronic system (10) in accordance with Claim 1 wherein said user interface is configured to assist the customer in formulating a request (120) for specific types of consulting services to address the problem.

5. An electronic system (10) in accordance with Claim 1 wherein said user interface comprises a plurality of customer options presented via a menu screen (36).

6. An electronic system (10) in accordance with Claim 5 wherein said plurality of customer options comprises at least two of a Consulting Request Wizard (42), a Sample Services option (46), a Sample Reports option (50), and a Project Collaboration option (54).

7. An electronic system (10) in accordance with Claim 6 wherein said plurality of customer options comprises the Consulting Request Wizard (42), the Consulting Request Wizard configured to guide the customer interactively in defining the problem to be addressed.

8. An electronic system (10) in accordance with Claim 7 wherein said Consulting Request Wizard (42) comprises a plurality of prompts to the customer to provide information relating to the problem to be addressed.

9. An electronic system (10) in accordance with Claim 8 wherein the plurality of prompts to the customer to provide information relating to the problem to be addressed comprises a prompt to the customer to provide information identifying a physical plant to which the problem relates.

10. An electronic system (10) in accordance with Claim 8 wherein the plurality of prompts to the customer to provide information relating to the problem to be addressed comprises a prompt to the customer to provide information on the operating conditions of the physical plant.
